# EUROPEAN PATENT APPLICATION

(11) **EP 1 902 836 A1**
(43) Date of publication of application: **26.03.2008**
(21) Application number: 07113839.0
(22) Date of filing: 06.08.2007
(51) Int. Cl.: B32B 27/12

(54) **Breathable laminate with a high abrasion resistance and method of manufacturing the same**

(30) Priority: 19.09.2006 US 533174
(71) Applicant: Tredegar Film Products Corporation, Richmond, VA 23225 (US)
(72) Inventor: Ray, Carl Douglas, Chesterfield, VA 23832 (US); Baldwin, Geoffrey Mial, Mechanicsville, VA 23116 (US)
(74) Representative: Helbing, Jörg

(57) **Abstract**

The invention is a highly abrasion resistant laminate material with high resistance to water penetration, yet breathable, that can be manufactured to various degrees of breathability to suit any particular application need and a method for making same.

## Description

### FIELD OF INVENTION

The invention pertains to breathable laminates. More particularly, the invention pertains to laminate materials that are water vapor permeable, but are resistant to hydrostatic head.

### BACKGROUND OF INVENTION

There is a need in many industries for materials that are breathable, i.e., permit water vapor to pass through, but remain resistant to liquid water penetration. A few examples of the many uses of such materials include building wraps and protective apparel.

Regarding building wraps, it is often necessary during the construction phase to protect the interior of a structure from environmental elements, such as rain, wind and dust, before the exterior siding and/or windows are installed. It is therefore common practice to wrap the exterior of partially constructed structures in a breathable material. Several such materials are available on the market, including, for instance, Tyvek™, which is manufactured by E. I. duPont de Nemours & Co. of Wilmington, Delaware, USA, Typar™, sold by BBA Group plc, London, England, and WeatherMate™, sold by the Dow Chemical Co. of Midland, Michigan, USA. Preferably, these materials should be able to withstand hurricane force winds without permitting the rain to penetrate the material.

While such materials should be resistant to water penetration, they also must be permeable to water vapor. Particularly, moisture buildup within a building structure can result in mold and mildew which can cause structural and aesthetic damage to the building and create health hazards for occupants of the building. Accordingly, water vapor must be able to pass through the material in order to minimize moisture inside the structure.

Regarding protective apparel (e.g., protective clothing worn by, e.g., environmental hazard and environmental waste cleanup personnel), it is necessary for this material to be resistant to penetration by liquids, but to permit water vapor to exit so that the user will not become overheated and uncomfortable from his or her own perspiration.

Permeability to moisture vapor can be rated and graded in accordance with any reasonable testing procedure. One such procedure is ASTM E-96 Method A or B. In accordance with this test, permeability is given as a number of "perms", where a perm is approximately 7.2 grams per square meter per day of water vapor that passes through the material under the test conditions specified in the test specification. Reference can be made to this ASTM testing standard for complete information about the test. However, the test is generally run with a Delta P of 50% relative humidity at room temperature.

Resistance to liquids can be measured with any reasonable testing procedure. One such test is AATCC Test Method 127 (Water Resistance: Hydrostatic Pressure Test). It is desirable to hold out liquids in several applications. In the case of housewrap, hurricane force winds may drive rain against the structure. Based on the above test method, it is desirable to withstand greater than 210 cm of waterhead pressure. Other limits may be required depending on the application and liquid being held out.

The degree of vapor permeability may vary according to the application and even the geographical location. For instance, in the United States, south of the Mason Dixon line, where it is more common to have higher humidity conditions outside the structure and drier air conditioned air inside the structure, typical desired perm ratings for housewrap materials tends to run fairly low, i.e., in the 5-15 perms range. However, north of the Mason Dixon line, where typically, higher humidity conditions exists inside the structure and cooler dry air exists outside the structure (especially in the fall, winter and early spring) much higher water vapor permeation is generally desired, i.e., on the order of about 35-100 perms. A similar situation exists for protective apparel. Depending on the particular contaminant or hazardous material from which protection is desired, the permeability rating of the protective apparel can range over several orders of magnitude.

In addition to being breathable, these materials should be resistant to abrasion. If the material becomes abraded to the point of exposing the fibers of the base material, it likely will no longer be water resistant. For example, these materials can be exposed to significant abrasion as a result of strong winds carrying dust and dirt (in the case of housewraps) or the material rubbing against itself, equipment or the ground (in the case of both housewraps and protective apparel). If the material is abraded to the point where it is no longer moisture resistant, it must be replaced or patched.

Accordingly, what is desired is a material that is not only breathable and abrasion resistant, but also configurable to vary breathability.

### SUMMARY OF INVENTION

In accordance with one aspect of the invention, a laminate material is provided having high resistance to water penetration and high abrasion-resistance. The material can be manufactured with various degrees of breathability to suit a particular need. The laminate comprises at least two layers, namely, a first layer for providing bulk and strength and a second layer comprising a hard mineral or the like, such as calcium carbonate, for providing adjustable breathability, wherein the second layer at least partially encapsulates at least some of the fibers of the substrate layer.

The second layer comprises a polymeric matrix in which are dispersed relatively hard particles. The particles not only impart hardness to the coating, but also facilitate its breathability. That is, once the laminate is formed, it is activated using known techniques to create microvoids around the particles. The voids are small enough to resist water penetration, but large enough to permit vapor permeation. The activation of the laminate is preferably accomplished by intermeshing gear activation because that permits more aggressive activation versus tenter stretching, for example, and because the depth of engagement of the activating gears can be varied to effect the desired breathability of the laminate depending on the particular application. Also, the concentration of particles in the coating can be increased or decreased to increase or decrease, respectively, the abrasion resistance and breathability of the laminate.

Another aspect of the invention is a process for making the laminate in which a commercially-available substrate is coated with a second layer to impart the desired degree of abrasion resistance and breathability to the resulting laminate. In a preferred embodiment, the process comprises extruding a second layer comprising dispersed particles, immediately laminating the second layer to the substrate layer using a vacuum coating process, and then activating the laminate.

### BRIEF DESCRIPTION OF DRAWINGS

Figure 1 is a schematic diagram of a device for the production of a laminate in accordance with the principles of the present invention.

Figure 2 is a scanning electron micrograph of a laminate in accordance with the principles of the present invention.

Figure 3 is a table illustrating the characteristics of an exemplary laminate made in accordance with the principles of the present invention.

### DETAILED DESCRIPTION OF INVENTION

The invention pertains to a laminate comprising at least two layers. The laminate may comprise more than two layers, as discussed further below, but essentially comprises a first layer for providing bulk and strength to the laminate and a second layer for providing a desired level of breathability and abrasion resistance.

The first layer comprises a substrate which may be any conventional fibrous material or apertured film through which a vacuum can be drawn. Preferably, the substrate is a fibrous material. The fibrous material may comprise a nonwoven web of synthetic or natural fibers, such as spunbonded, carded, meltblown, wet-laid, hydroentagled nonwovens, or a woven material, such as a textile, netting, or scrim. Suitable materials for the substrate are well known and include, for example, low and high density polyolefins, mettallocene-catalyzed polyolefins, cellulose, regenerated cellulose and other cellulose derivatives, and fiber glass. In a preferred embodiment, the substrate is a spunbonded nonwoven comprised of polypropylene fibers.

The substrate may be of any reasonable weight and should be selected based on the desired bulk and strength for the given application. Typically, the substrate ranges from about 10 to about 100 g/m². For instance, the substrate may be about 70 g/m² for housewraps, and about 40 g/m² for protective apparel.

The second layer is a polymeric matrix having particles dispersed therein. Preferably, the second layer is formed from an extruded thermoplastic composition that may be extruded as a mono or multi-layer curtain, which is capable of suspending the particulates as described below, and, once extruded or polymerized, capable of being activated without being ruptured to a significant degree. As used here, "activation" refers to the initial stretching of the laminate to a degree sufficient to create microvoids in the second layer.

In a preferred embodiment, the composition comprises two parts prior to extrusion--a particle dispersion and a thermoplastic base polymer. Although the composition of the second layer is described herein in terms of these two major components, it should be understood that this is done for illustrative purposes and the invention is not limited to a two-part composition. For example, it is within the scope of the invention for the particles to be mixed directly with the base polymer to avoid the preparation of a particle dispersion altogether. Additionally, it is within the scope of the invention to further divide the second layer composition into three or more sub-compositions which are mixed at the time of extrusion.

The particle dispersion serves to homogenize the individual particles in the composition to permit good extrusion. That is, prior to extrusion, it is desirable to have the particles individually dispersed within the composition to the maximum extent possible to prevent agglomerates which might cause the formation of unwanted holes, rather than the desired microvoids, during activation.

The particle dispersion may be layered with different sizes or types of filler that impart different characteristics, such as improved abrasion resistance, that still will result in micro-voids around the particle when activated in either a mono or multilayer curtain.

The particle dispersion comprises mainly relatively hard particles and a carrier resin. Suitable particles include those having a size of about 1.2 microns to a plus 3 sigma of 5.0 microns, and a hardness of at least about 3 on the Moh's hardness scale. As used herein, the term "relatively hard" refers to a particle having a hardness of at least 3. Suitable relatively hard particles include, for example, calcium carbonate, kaolin, talc, silicon dioxide, and barium sulfate and mixtures of these and other particles. In a preferred embodiment, the particles are calcium carbonate due to its wide availability, reasonable cost, and hardness.

Suitable carrier resins include those having relatively low viscosity compared to the base polymer. Carrier resins typically are chosen to have the desired level of affinity for the mineral being compounded to improve the level of dispersion. Carrier resins include, for example Dow 2517, which is an octane based linear polyethylene, and combinations thereof. In a preferred embodiment, the carrier resin comprises a linear low density polyethylene (LLDPE) resin and the calcium carbonate Masterbatch has a melt index of about 0.0005 to 0.002, preferably about 0.001, and a density of about 1.8 to about 2 g/cc², preferably about 1.92 g/cc².

The concentration, size, and type of the particles in the dispersion significantly affects both the abrasion resistance of the laminate and the degree of breathability that can be imparted to it during activation. Higher percentages of particles generally provide greater abrasion resistance and permit greater breathability. Although the concentration of particles can vary, it has been found that relatively high loading of the particles in the dispersion is preferred. Typically, the particle concentration in the dispersion is about 55 to about 95 % wt., preferably about 70 to about 90 % wt., and more preferably about 80% wt. (Unless otherwise stated, constituent concentrations of the particle dispersion are stated relative to the weight of the entire dispersion.) The concentration of the carrier resin is usually less than that of the particles. Typically, the concentration of the carrier resin is about 5 to about 45 % wt., preferably about 10 to about 40% wt., and more preferably about 20% wt. Good results have been obtained with a particle concentration of about 80% wt and a carrier resin concentration of about 20% wt.

The other major component of the second layer composition is the base polymer. Suitable base polymers include known extrudable thermoplastics, for example, polyethylenes, polypropylenes, polyurethanes, polyamides, elastomers (although elastomers tend to be more expensive and, therefore, less preferred), and combinations thereof. Preferably, the base polymer is a high density polymer such as high density polyethylene (HDPE). The high density improves the hardness and, therefore, the abrasion resistance, of the film as well as permits greater breathability to be imparted to the film during activation. However, it could be a polypropylene or a medium density polymer, such as MDPE or a linear low density PE (LLDPE). In a more preferred embodiment of the invention, the base polymer is a HDPE with a density of about 0.950 to about .965 g/cc² and a melt index of about 1.0 to about 10.0. In a highly preferred embodiment, the base polymer is a HDPE with a density of about 0.962 g/cc² and a melt index of about 6.5.

The relative concentrations of the particle dispersion and base polymer in the second layer composition may vary according to the application. Typically, the particle dispersion has a concentration of about 40 to about 80% wt., preferably about 50 to about 70% wt., and more preferably about 55 to about 65% wt. (Unless otherwise stated, constituent concentrations of the composition are stated relative to the weight of the entire composition.) Typically, the concentration of the base polymer is from about 8 to about 48% wt., preferably from about 18 to about 38% wt., and more preferably from about 23 to about 33% wt. Good results have been obtained with a particle dispersion concentration of about 60% wt and a base polymer concentration of about 28% wt.

In addition to the particle dispersion and base polymer, the composition preferably comprises additives to impart properties to the product which are not related to hardness or breathability of the laminate. Such additives may include, for example, colorants (e.g., titanium dioxide to impart whiteness and opacity), process aids (e.g., Viton™, a fluoropolymer processing aid polymer available from E. I. duPont de Nemours & Co. of Wilmington, Delaware, USA), UV resistance agents, flame retardants, anti-micrbbials, anti-rodent agents, anti-insect agents, odor neutralizing agents, or other additives and combinations thereof. Concentrations of such additives are readily determinable by one of skill in the art based on this disclosure.

These and other types of additives, alternately, can be added to the first, substrate layer 17. Furthermore, such additives would be beneficial in the types of product applications discussed herein regardless of the composition or manufacturing process of the product. Specifically, housewraps, protective apparel, carpet backing, roofing underlayments, ice dam material, and window/door flashing all would benefit from incorporating additives such as UV resistant agents, flame retardants, antimicrobials, anti-rodent agents, anti-insect agents, and/or odor neutralizing agents.

The titanium dioxide may be a blend of 67% of the active ingredient, TiO₂, in a base of LDPE and have a density of 1.91 grams per cubic centimeter and a melt index of 2.5. The UV inhibitor that may be added improves UV resistance of the laminate. This may be a blend of 10.2% active ingredient (UV inhibitor) in a base of LDPE and have a density of 0.93 grams per cubic centimeter and a melt index of 10. The process aid named Viton™ is a fluoropolymer available from E. I. duPont de Nemours & Co. of Wilmington, Delaware, USA. This may be a blend of 2% Viton™ in a base of LDPE and have a density of 0.92 grams per cubic centimeter and a melt index of 1.0. All percentages are by weight.

The first layer and the second layer are laminated using a vacuum coating process that causes the second layer to at least partially encapsulate at least some of the fibers of the substrate. To strongly lock the second layer to the first, complete encapsulation is not required. Particularly, most of the abrasion resistance is provided merely by causing the material of the second layer to substantially surround a plurality of the fibers of the first layer to form a mechanical connection therebetween (in addition to any chemical bond therebetween). For instance, assuming that the fibers of the first layer are generally cylindrical (which is merely exemplary, as other shapes are available), it is desirable for the material of the second layer to be forced (via the vacuum pressure) past the geometric center of the cylinder such that it surrounds more than half of the fiber. Thus, when the material cools to a hardened state, it is mechanically locked to the fiber. This form of mechanical locking to the fiber will impart significant abrasion resistance to the entire laminate even if it occurs with respect to only some of the fibers.

Depending on the particular formulations and extrusion processes, complete encapsulation of some or all of the fibers may or may not occur.

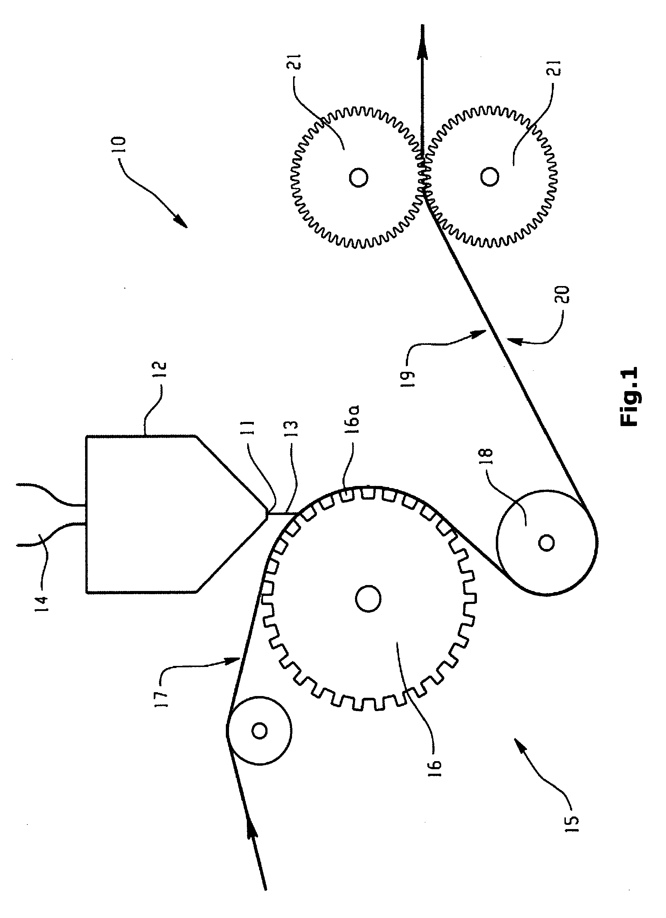

Figure 1 is a schematic diagram illustrating the apparatus 10 for manufacturing the laminates. In accordance with one preferred embodiment of the invention, the components that make up the second layer are introduced into the hopper 21 of an extruding apparatus where they are heated to a thermoplastic state and mixed to create a homogeneous blend. The blend may be heated to and maintained at a very high temperature, on the order of about 450° Fahrenheit, for instance. While in the thermoplastic state, the blend is extruded, such as by passing it through a slot 11 in an extruding die 12 to form a sheet of the second layer 13.

In one preferred embodiment of the invention, the second layer is extruded to a weight in the range of 20-200 grams per square meter. In a more preferred embodiment, the second layer is extruded to a weight in the range of 25-55 grams per square meter. In an even more preferred embodiment of the invention, the second layer is extruded to a weight in the range of 35-45 grams per square meter. In an even more preferred embodiment of the invention, the second layer is extruded to a weight of 40 grams per square meter.

Die 12 is positioned immediately adjacent to the vacuum coating apparatus 15. The die 12 preferably is positioned within about 2 to 3 inches of the vacuum coating apparatus 15.

The vacuum coating apparatus 15 comprises a drum 16 having a sieve-like surface 16a having a plurality of apertures therein. A vacuum is generated inside the drum 16. The substrate 17 is fed onto the surface 16a of the drum 16 with the help of a guide roller 18. The second layer 13 is brought into surface-to-surface contact with the substrate 17 by guide roller 18 immediately out of the die while still in a thermoplastic state. The drum 16 and the guide roller 18 rotate so as to advance the two layers 13 and 17 laminate over the drum surface 16a.

The vacuum pressure should be set high, but not so high as to create holes in the second layer. In a preferred embodiment of the invention, the vacuum is a very strong vacuum, on the order of greater than 2 inches (51 mm) of mercury, preferably about 10-20 inches (254-508 mm) of mercury, and more preferably about 14 inches (356 mm) of mercury. Accordingly, the substrate 17 is drawn very strongly and held very firmly to the surface of the drum as it is advanced over the drum. The substrate film preferably is highly breathable such that the vacuum draws right through the substrate film 17 and strongly draws the second layer 13 against the substrate film 17. The vacuum in combination with the still thermoplastic second layer causes the second layer to be drawn through and around the fibers of the substrate layer 17 thereby mechanically locking the fibers of the first, substrate layer with the material of the second layer 13. Hence, the two layers become very securely mechanically attached to each other when the second layer cools. It also provides the superior abrasion resistance of the laminate of the present invention since the two layers are essentially locked together mechanically in addition to any chemical bond between the two layers.

The vacuum coating process is believed to cause less damage to the substrate material than prior art techniques such as hard nip techniques, in which the two layers are essentially compressed together by a nip between two rollers, one made of a resilient material such as rubber and the other made of a hard material such as steel. Such techniques can damage the substrate as a result of the high lay-on pressure at the nip required to cause the extrudate to bond to the substrate. The decreased damage to the substrate should improve strength properties of the laminate, including abrasion resistance.

Of course, the second layer 13 begins to cool as soon as it leaves the die and becomes exposed to room temperature. In addition, the air drawn by the vacuum increases the rate of cooling. Further, cooling is even further facilitated due to the intimate contact to the substrate layer and the resultant conductive heat transfer. In addition, cooling units (not shown) may be provided to assist in and speed up the cooling process either in connection with the vacuum coating stage or after it. As the second layer cools and becomes hardened, the mechanical bond between the two layers becomes stronger.

The two layers are tightly bound to each other and the laminate is highly abrasion resistant.

At this point, the laminate likely has extremely low or no breathability.

Hence, after the second layer cools below the thermoplastic state, the laminate continues on to an activation stage 20 in order to impart the desired level of breathability to the laminate. In applications in which little or no breathability is desired, the activation stage can be skipped. Such applications may include protective apparel that is to be used in extremely hazardous environments, for instance.

In the activation stage 20, the laminate 19 is stretched to create microvoids in the second layer, such as by feeding the laminate through at least one pair of intermeshing gears 21, 21 that will stretch the laminate (and particularly the second layer), creating micro-voids in it, and thereby imparting breathability to it without making it permeable to liquid water. The particular permeability achieved by the activation process can be accurately controlled over a broad range by proper selection of the depth of the activation (e.g., the depth of the teeth of the gears) and the percentage of calcium carbonate in the film 13. Other factors that affect breathability are the coating weight of the second layer 13 on the first, substrate layer 17 and the formulation of the base polymer in the second layer 13. Generally, higher density base polymers permit higher breathability than linear low density polymers.

In Figure 1, the gear teeth are oriented in a direction transverse ("transverse direction") to the direction that the laminate is moving ("machine direction), resulting in the laminate being stretched in the machine direction. In a preferred embodiment of the invention, the gear teeth are oriented parallel to the machine direction, resulting in the laminate being stretched in the transverse direction.

As mentioned above in the background section, the desired breathability may be anywhere from 0 to hundreds or even thousands of perms and beyond. The activation stage can be configured to provide any desired level of breathability in accordance with well-known techniques.

At this point, the laminate is essentially complete and can be cut to size and packaged for sale.

If desired, the laminate may be surface treated, such as for printing or with an aqueous functional coating.

Since the original layer of second material has at least partially encapsulated at least some of the fibers of the substrate material and has become so strongly attached to it, it should not be necessary to apply another layer. However, if desired, either before or after the activation process, another lamina of the second layer can be deposited on the opposite side of the substrate layer. However, it is believed that this will rarely be desirable since the two layer laminate will already be extremely abrasion resistant. Furthermore, the laminate 19 itself will have a much lower breathability than the original substrate material 17 before the second layer was deposited on it. Accordingly, it typically will be much more difficult to draw a strong vacuum through the laminate 19 for a second vacuum coating process than it was for the original substrate material. Hence, if it is desirable to make a three-layer laminate, it is preferable to use a different lamination process, such as extrusion coating, to apply the third layer.

Furthermore, depending on the application, it may be desirable to apply third or subsequent layers of different materials on the two layer laminate. This can be done by any reasonable technique. For instance, should high viral protection be desired, for instance, for protective apparel applications, then an additional monolithic second layer composed of a material such as co-polyester or polyurethane can be laminated to either one or both sides of the two layer laminate. However, as noted above, techniques other than above-described vacuum coating technique likely would be more suitable since it will be difficult to draw a vacuum through the two layer laminate. On the other hand, if the activation process is configured to provide a highly breathable laminate, then vacuum coating third or subsequent layers may be reasonable.

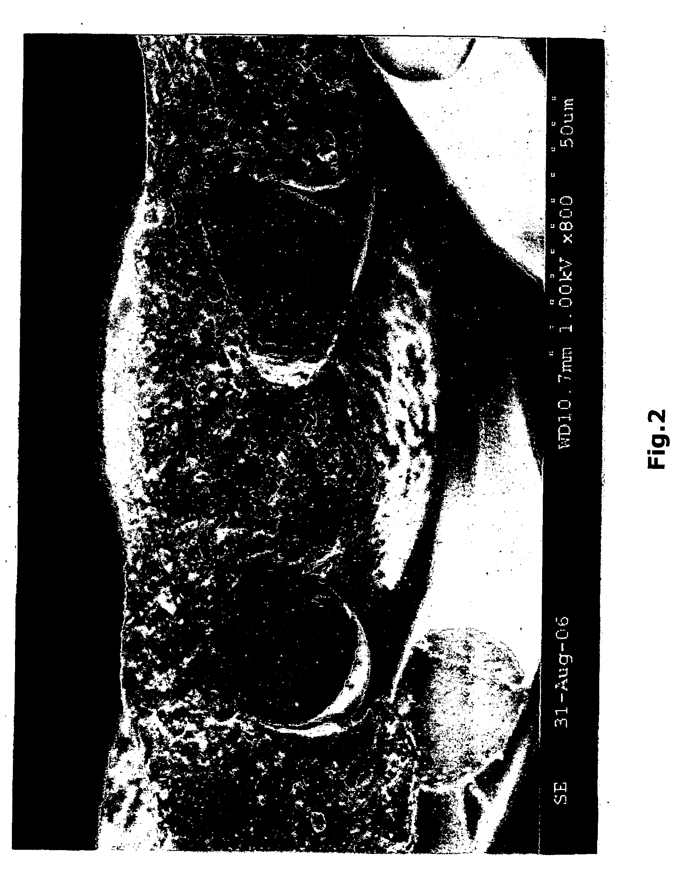

Figure 2 is a scanning electron micrograph (SEM) of a cross section of an exemplary housewrap 200 made in accordance with the principles of the present invention. In this particular example, note that few or none of the fibers 201 of the first layer are completely encapsulated by the material 202 of the second layer, but that many of the fibers are more than halfway surrounded by the material of the second layer, thereby providing a mechanical lock against the second layer being separated from the first layer. In other embodiments some or all of the fibers of the first layer may be entirely encapsulated. The level of encapsulation or surrounding of the fibers of the first layer by the material of the second layer will depend on many factors including the temperature of the extrusion, the formulations of the constituents of the second layer, the strength of the vacuum applied, and the distance between the extrusion slit and the vacuum drum.

The superior abrasion resistance of the laminate of the present invention is largely the result of the mechanical locking of the second layer to the fibers of the first layer. However, abrasion resistance is also partially the result of the composition of the second layer, specifically the hardness of the base polymer as well as the content and type of particle used. A high content of a very hard particle, like calcium carbonate, will improve abrasion resistance. Additionally, the use of a high density substrate, such as a high density polyolefin, also will increase abrasion resistance.

The present invention provides abrasion resistance up to two orders of magnitude greater than prior art housewrap or protective apparel laminates. In prior art laminates of similar nature, the substrate and the second layer commonly are bonded to each other by a technique known as hard nip, in which the two layers are essentially compressed together by a nip between two rollers, one made of a resilient material such as rubber and the other made of a hard material such as steel. In such techniques, the bond between the two layers is an adhesive bond, and there is little or no mechanical bond between the two materials.

In tests performed generally in accordance with the standardized TAPPI T476 abrasion test method, housewraps made in accordance with the principles of the present invention were determined to have abrasion ratings greater than 4000 cycles as compared to abrasion ratings of about 44-152 cycles for other commercially available housewrap products.

The laminates in accordance with the invention have an abrasion resistance of at least 200 cycles, preferably at least 400 cycles, more preferably at least 100 cycles, and most preferably at least 4000 cycles as measured, for instance, using the standardized TAPPI T476 abrasion test method.

Having thus described a few particular embodiments of the invention, various alterations, modifications, and improvements will readily occur to those skilled in the art. Such alterations, modifications and improvements as are made obvious by this disclosure are intended to be part of this description though not expressly stated herein, and are intended to be within the spirit and scope of the invention. Accordingly, the foregoing description is by way of example only, and not limiting. The invention is limited only as defined in the following claims and equivalents thereto.

### Examples

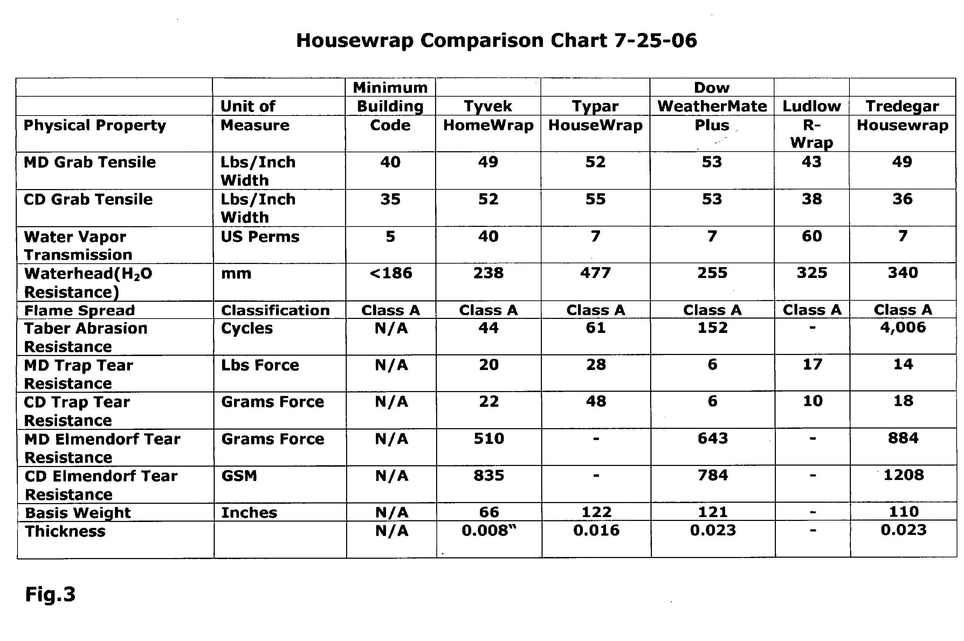

Figure 3 is a table illustrating certain characteristics of a laminate made in accordance with a particular embodiment of the principles of the present invention as compared to comparable commercially available products. The inventive laminate reported in connection with these particular test results comprised:
- 60%: Calcium carbonate blend
- 28%: Base polymer
- 4%: UV inhibitor blend
- 4%: TiO₂ blend
- 4%: Viton™-A blend
wherein the calcium carbonate blend is 80% calcium carbonate and 20% linear low density carrier polyethylene (LLDPE) having a melt index of 0.001 and a density of 1.92 grams per cubic centimeter. The particle size of the calcium carbonate blend was 1.2 microns (± 3σ). The base polymer was high density polyethylene (HDPE) with a density of 0.962 grams per cubic centimeter and a melt index of 6.5.

The titanium dioxide additive was a blend of 67% of TiO₂ in a base of LDPE and had a density of 1.91 grams per cubic centimeter and a melt index of 2.5. The UV inhibitor was a blend of 10.2% active ingredient (UV inhibitor) in a base of LDPE and had a density of 0.93 grams per cubic centimeter and a melt index of 10. The Viton™ was a blend of 2% Viton™ in a base of LDPE and had a density of 0.92 grams per cubic centimeter and a melt index of 1.0.

The second layer was extruded to a weight of 40 grams per square meter and was laminated to a substrate of a weight of 70 grams per square meter. The vacuum drum was placed within about 4 inches of the extrusion slit and a vacuum of 14 inches (356mm) of mercury was applied.

The laminate was activated to a depth of 10 mils. Activation depth can range from near zero (0) to several hundred mils. The activation rolls may be temperature controlled as well to assist in the efficient activation of the laminate.

As can be seen from the table of Figure 3, the Taber abrasion resistance of the inventive laminate was tested generally in accordance with TAPPI T476 abrasion test method. It provided abrasion resistance of 4066 cycles, whereas the other commercial products achieved abrasion resistances in the range of 44-152 cycles. It also achieved tensile strengths in line with the other, commercial products. Water vapor transmission and waterhead tests were conducted generally in accordance with ASTM E-96 Method A and AATCC Test Method 127 (Water Resistance: Hydrostatic Pressure Test), respectively. The inventive laminate achieved a water vapor resistance generally in line with the other laminates. However, it should be understood that the water vapor resistance can be selectively set to essentially any reasonable value by proper selection of the activation parameters and the formulation of the calcium carbonate blend as previously discussed. Furthermore, the inventive laminate had a waterhead resistance of 340, essentially in line with the other products.

## Claims

1. A laminate comprising:
a first layer comprising at least a substrate comprising fibers; and
a second layer comprising relatively hard particles dispersed in a polymeric matrix, wherein said second layer is mechanically attached to at least some fibers of said first layer.

2. The laminate of claim 1 wherein said second layer encapsulates at least some of said fibers.

3. The laminate of claim 1 wherein said substrate is non-woven.

4. The laminate of claim 1 wherein said second layer comprises a composition of calcium carbonate and a base polymer.

5. The laminate of claim 1 wherein said second layer comprises a composition of a relatively hard mineral, a base polymer, and at least one of a colorant, process aids, a UV resistance agent, a flame retardant, an anti-microbial, an anti-rodent agent, and an anti-insect agent.

6. The laminate of claim 1 wherein said second layer comprises:
50-70% by weight of a particle dispersion; and
18-38% by weight of a base polymer.

7. The laminate of claim 1 wherein said second layer comprises:
60% by weight of a calcium carbonate blend; and
28% by weight of high density polyethylene.

8. The laminate of claim 6 wherein said calcium carbonate blend comprises about 80% calcium carbonate by weight in a linear low density resin base.

9. The laminate of claim 1 wherein said laminate includes micro voids in said second layer, whereby said laminate is breathable.

10. The laminate of claim 1 wherein said laminate has an abrasion resistance of at least 200 cycles in accordance with TAPPI T476 abrasion test method.

11. The laminate of claim 1 wherein said laminate has an abrasion resistance of at least 1000 cycles in accordance with TAPPI T476 abrasion test method.

12. The laminate of claim 1 wherein said laminate is activated.

13. A method of manufacturing an abrasion resistant laminate comprising the steps of:
providing a first, breathable, fibrous substrate on a sieve-like surface;
applying a vacuum to said sieve-like surface;
extruding a second layer comprising relatively hard particles dispersed in a polymeric matrix;
feeding said second layer, while still in a thermoplastic state, onto said substrate on said sieve-like surface to form a laminate, said vacuum being of sufficient strength to draw said film through and around at least some of said fibers of said substrate film so as to mechanically lock to said fibers.

14. The method of claim 13 further comprising the step of:
activating said laminate.

15. The method of claim 13 further comprising the step of:
stretching said laminate so as to create micro voids in said second layer.

16. The method of claim 14 wherein said stretching step comprises passing said laminate through intermeshing gears.

17. The method of claim 13 wherein said vacuum is applied within the range of 10-20 inches (254-508 mm) of mercury.

18. The method of claim 13 wherein said vacuum is applied at about 14 inches (356 mm)of mercury.

19. The laminate of claim 13 wherein said second layer comprises:
55-65% by weight of a particle dispersion; and
23-33% by weight of a base polymer.

20. The laminate of claim 19 wherein said particle dispersion comprises about 80% calcium carbonate in a linear low density resin base.

21. A method of manufacturing an abrasion-resistant laminate comprising the steps of:
providing a breathable substrate comprising fibers;
extruding a film comprising relatively hard particles dispersed in a polymeric matrix; and
vacuum coating said film onto said substrate while said film is still in a thermoplastic state.

22. The method of claim 21 wherein said film encapsulates at least some of the fibers of said substrate film during said vacuum coating step.

23. The method of claim 22 further comprising the step of:
activating said film subsequent to said vacuum coating step.

24. The method of claim 22 wherein said vacuum coating step comprises applying a vacuum of greater than about 2 inches (51 mm) of mercury.
